# EUROPEAN PATENT SPECIFICATION

(11) **EP 1 145 597 B1**
(45) Date of publication and mention of the grant of the patent: **24.03.2004**
(21) Application number: 99936824.4
(22) Date of filing: 30.07.1999
(51) Int. Cl.: H05B 3/14, H05B 3/26, H05B 3/28

(54) **IMPROVEMENTS RELATING TO ELECTRICALLY HEATED WATER BOILING VESSELS**
VERBESSERUNGEN AN ELEKTRISCH GEHEIZTEN KOCHGEFÄSSEN
AMELIORATIONS APPORTEES A DES BOUILLOIRES ELECTRIQUES

(30) Priority: 30.07.1998 GB 9816645
(43) Date of publication of application: 17.10.2001
(73) Proprietor: OTTER CONTROLS LIMITED, Buxton, Derbyshire SK17 6LA (GB)
(72) Inventor: O'NEILL, Robert, Andrew, Buxton Derbyshire SK17 9NQ (GB); HOWARTH, John, Anthony, Buxton Derbyshire SK17 6HS (GB)
(74) Representative: Milhench, Howard Leslie
(86) International application number: PCT/GB1999/002504
(87) International publication number: WO 2000/007410

(56) References cited:
- EP-A- 0 427 433
- EP-A- 0 715 483
- DE-A- 4 317 040
- GB-A- 2 185 161
- US-A- 4 849 611

## Description

### Field of the Invention:

This invention concerns improvements relating to electrically heated water boiling vessels, such as electric kettles and hot water jugs for example, and more particularly concerns the control of such appliances.

### Background of the Invention:

Electric kettles and hot water jugs are commonly provided with an element protector control adapted to switch off the supply of power to the electric heating element of the appliance in a sensed overtemperature condition resulting from the appliance being switched on empty for example, and a steam control for reducing or switching off the supply of power to the heating element when the water being heated boils. Such element protector controls and steam sensor controls generally include a thermal sensor, commonly a bimetallic element, and it is not uncommon for element protector controls further to include some form of secondary or back-up protection arranged to operate in the event, however unlikely, of failure of the primary control. An exemplary element protector control is the X1 control manufactured by Otter Controls Limited and substantially as described in GB-A-2 194 099 with reference particularly to Figures 3A, 3B and 3C thereof, and an exemplary steam control is the J1 control manufactured by Otter Controls Limited and substantially as described in GB-A-2 212 664 with reference particularly to Figures 3A to 3M thereof.

Whilst it is commonly the case that water boiling appliances incorporate separate element protector and steam sensor control, there have been proposals to effect both functions by means of a single control. A single sensor electronic control is described in GB-A-2 228 634, and in GB-A-1 143 834 there is described a proposal to incorporate an enclosure within the water chamber of a water boiling vessel, the enclosure being arranged to fill with water when the chamber is filled and to be heated by the appliance heating element so that when the water boils the water in the chamber is driven from the enclosure by steam thereby simulating a dry boil situation within the enclosure which can be sensed by a bimetallic or other thermal sensor.

Despite its apparent simplicity and the promised advantage of a single sensor control providing both overtemperature protection and boil sensing, the arrangement of GB-A-1 143 834 was, so far as we are aware, never put into production by the proprietors of GB-A-1 143 834. Tests that we conducted proved that it was impossible with a heating element as described in GB-A-1 143 834 to obtain a satisfactory single sensor control arrangement.

Two different solutions to the problem of making the enclosure idea of GB-A-1 143 834 work are described in WO-A-9318631 and WO-A-9318632. In the former of these, an arrangement is described wherein a stainless steel sheathed heating element has a hot return portion welded to a stainless steel head plate and an enclosure is provided around the hot return portion, the attachment of the hot return portion of the heating element to the head plate being by means of a highly localized spot weld. In the latter, again a sheathed heating element is employed and the enclosure is a structure surrounding a portion of the heating element and extending generally coaxially therewith.

Yet another solution is described in GB-A-2 283 155 and employs a so-called thick film planar heating element comprising a substrate having a thick film resistive track or layer formed thereon with appropriate insulation between the restive track or layer and the substrate and/or over the resistive track or longer.

Whilst the abovementioned solutions have enabled the enclosure concept of GB-A-1 143 834 to be made to work, we have found that a problem remains in that the solutions can be voltage sensitive. Namely, a solution which works under the nominal 240 volts mains supply in the UK may not work or may work less efficiently if used in, say, Spain where the mains supply is nominally 220 volts. To be useful throughout Europe, an appliance needs to be fully operational within a supply voltage range of from 210 volts to 250 volts. The supply voltage affects both the operating temperature of a heating element under normal conditions and also the rate of temperature rise in the event of a dry boil. For conventional heating element overtemperature (dry boil) protection controls this is not too serious since a lower supply voltage not only means that the heating element runs at a lower temperature but also means that the rate of temperature rise during dry boil is much reduced, thereby allowing longer for the control to react. However, for a single sensor dry boil and steam sensor control embodying the enclosure principle of GB-A-1 143 834, the result is that a control designed for a lower supply voltage may operate prematurely at a higher voltage, and a control set for a higher voltage may not operate at all at the lower voltage.

### Summary of the Invention:

In order to overcome or at least substantially reduce the abovementioned problems the present invention provides a thick film heating element having a portion of its resistive track within a defined part of the surface area of the heating element formed of a material having a negative temperature coefficient of resistance (NTCR) and having the main part of the track formed of a material having a positive temperature coefficient of resistance (PTCR), the arrangement being such as to compensate, at least in part, for the effect of different supply voltages upon the operating temperature of said track portion.

In an arrangement embodying the enclosure concept of GB-A-1 143 834 abovementioned, the present invention provides the resistance heating track of a thick film heating element with a portion designated to lie within the footprint enclosure and which is formed of a material having a negative temperature coefficient of resistance (NTCR), and the main part of the heating element track is formed of a material having a positive temperature coefficient of resistance (PTCR). By virtue of such an arrangement, if the heating element is subjected to a reduced supply voltage its running temperature is reduced and the resistance of the main part of the heating element track (which is much greater than the resistance of the track portion within the enclosure) is also reduced so that the current fall is less than would otherwise be the case and the fall in temperature is less than would be the case if the track had a zero temperature coefficient of resistance. At reduced temperature the resistance of the sensor track, namely the track portion within the enclosure, is increased, but the current through it is controlled primarily by the resistance of the main track and so the power dissipated by the sensor track is greater than would be the case if it had a zero temperature coefficient of resistance. The arrangement thus effects compensation for differences in supply voltage.

Currently available NTCR and PTCR materials known to us and based upon conductive ink type printable pastes incorporating metallic powder(s) and glass powder dispersed in a carrier medium do not enable full compensation for differences in supply voltage to be achieved, but nonetheless good results are obtainable. To achieve mil compensation, one approach would be to use a material for the main track which has an infinite PTCR, which may be approximated by a Curie point device. With such a device, the temperature coefficient of resistance of the sensor track is irrelevant since its power, and hence its temperature, would remain constant.

The above and other features and aspects of the invention are set forth in the appended claims and will best be understood by consideration of the following detailed description given with reference to the accompanying drawing.

### Description of the Drawing:

Figure 1 is a schematic view, partly cut away, of an exemplary water boiling jug to which the present invention might be applied; and
Figure 2 schematically illustrates how the present invention might be applied to the heating element of the Figure 1 water boiling appliance.

### Detailed Description of the Embodiment:

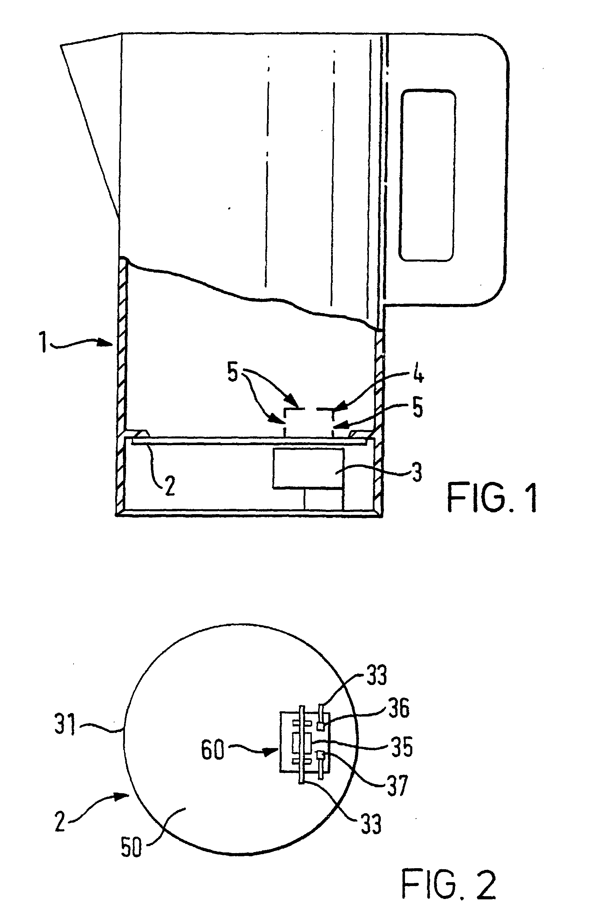

Referring first to Figure 1 of the accompanying drawings, it is to be noted that this figure corresponds to Figure 1 of the drawings of GB-A-2-283 155 aforementioned. An electrically powered water boiling jug 1, formed for example of a moulded plastics material, is shown as having a base formed as a planar electrical heating element 2, a thermally-responsive control 3 at a specific location on the underside of the heating element 2 and an enclosure 4 located opposite the control 3 on the opposite side of the heating element, the enclosure 4 having openings 5 formed therein.

The heating element 2 and the control 3 can take different forms, the essential requirement in this regard being that the thermally-responsive actuator of the control 3 must be in sufficiently close thermal contact with the heating element to be responsive to the temperature thereof. The control 3 may for example comprise a modified form of the aforementioned X1 control as described in GB-A-2 283 155 with reference to Figure 2 thereof and may have its bimetallic actuator in contact with the underside of the heating element 2. The heating element 2 may comprise a thin sheet of stainless steel, which forms the upper surface of the element, on the underside of which there is provided a thin layer of glass or other temperature-resistant electrically-insulating material. A resistance heating element proper is formed on the surface of the glass layer, for example by printing using electrically conducting ink type printing paste, and a further thin layer of glass or other temperature-resistant electrically-insulating material is provided over the printed element. The printing paste commonly comprises metal powders and glass dispersed in a carrier and is fired after printing to form the heating element tracks, the nature of the metal powder and its proportions in the mix determining the electrical properties of the track.

The holes 5 in the enclosure 4 permit water to enter the enclosure as the jug is filled and, as aforementioned, serve for the expulsion of water from the enclosure by steam generated when water boils in the vessel 1. Local boiling within the enclosure 4 as the main body of water is brought up to temperature, caused by the lack of significant convention currents within the enclosure, gives rise only to a steam bleed from the enclosure and the flow of replacement water into the enclosure from the relatively cooler main body of water. However, when the main body of water begins to boil, so the influx of relatively cool water to the enclosure ceases and the steam generated in the enclosure cause it rapidly to boil dry with a consequent rapid rise in the local temperature of the heating element. This rapid temperature rise is sensed by the control 3 which acts to switch off the supply of power to the element 2.

The enclosure 4 may be formed as in the arrangement described in WO-A-9318631 as a sheet metal fabrication which may be spot welded or riveted or otherwise attached in the requisite position above the control 3. If the heating element 2 is formed on a metal plate, or attached to a metal plate, and the plate forms the bottom of the vessel, as in the arrangement described, then the control could alternatively be located towards the side of the plate, close to the edge; the enclosure could then be formed as an integral part of the vessel moulding which might be arranged to overlap the plate and cover the area thereof opposite to the bimetallic element of the control, and the vents in the enclosure could be defined by steps in the bottom edge of the enclosure and one or more holes in its top surface.

Alternatively, the present invention could be employed in a water boiling vessel of the so-called cordless type, for example with a rotationally free cordless connector system of the kind described in our International Patent Application No. PCT/GB 93/01814 (WO-A-9406185). In such an application, the control might be placed centrally under the heating element, or at least centrally with respect to the vessel, and the enclosure could be a plastics moulding supported from the sides of the vessel and located at the centre of the heating element. Such a moulded plastics enclosure could be moulded integrally with the vessel, or alternatively could be separately formed but attached to and supported from the vessel walls. Given the close proximity of the enclosure to the heating element, it might be preferable if a moulded plastics enclosure is to be employed to form the enclosure of a material having superior heat resistant properties; a suitable material might for example be polyphenylene sulphide, e.g. Ryton™ from Phillips Petroleum, which is flame retardant and has a melting point in excess of 300°C.

Figure 2 is a schematic showing of the heating element 2 of the hot water jug of Figure 1 with the heating element tracks for the most part omitted for the sake of clarity. That said, however, comparison of Figure 2 hereof with Figure 3B of the drawings of GB-A-2 283 155 aforementioned will indicate, by similarity, that the planar heating element 2 comprises a stainless steel substrate or base plate 31 having an electrically-insulating first layer of glass formed thereon, a heater track 33 formed of electrically conductive ink type printing paste formed on the glass layer, and an electrically-insulating second glass layer formed over the heater track 33 and over the first glass layer. An opening or window 35 is provided in the second glass layer so as to expose the heater track 33 beneath the opening and the opening 35 is sized to enable the bimetallic actuator of the control of Figure 2 of GB-A-2 283 155 to be directly responsive to the temperature of the heater track 33, but to locate the feet of the carrier of that control on the glass surface outside of and surrounding the opening. Additional openings 36 and 37 are provided in the second glass layer at locations corresponding to terminal ends of the heater track 33 and are arranged to be contacted by forwardly projecting parts of spring conductors of the control 3 when the control is fitted in operative relationship with the heating element.

In operation of the thus-described planar heating element with the thus-described element protector control, as is described in more detail in GB-A-2 283 155, the fact that the bimetallic primary actuator of the control is in direct heat transfer relationship with the heater track of the element ensures a rapid response of the control to an element overtemperature situation. At the same time, by insulating the secondary protection means, namely the collapsible carrier of the control, from the heater track 33, it is ensured that the thermal overshoot which normally accompanies the primary operation of the control, that is to say the dynamic temperature rise that normally occurs in the element after operation of the primary protection, will not result in actuation of the secondary protection. The close thermal contact of the bimetallic primary actuator with the heater track furthermore enables improved primary protection response times to be achieved which additionally reduces the temperature overshoot level. These factors facilitate the selection of appropriate materials for the collapsible carrier of the control.

In accordance with the teachings of the present invention, the heating element track 33 is formed with a main part 50 which has a positive temperature coefficient of resistance, and a sensory part 60 which has a negative temperature coefficient of resistance and is shaped to correspond to the footprint of the enclosure 4 and encompasses the area of the heating element that is associated with the temperature sensitive elements of the control 3. It is of course to be appreciated that the showing in Figure 2 of the heating element track 33 is schematic only, and that in practice the track may be divided and serpentine as shown for example in EP-A-0787417.

The following example illustrates how the invention can enable the problem of different supply voltages to be overcome or at least substantially reduced. The example is based upon a supply voltage range of 200 volts to 240 volts and assumes that the resistance of the sensor track within the region 60 is much less than the resistance of the main part 50 of the heating element. It is further assumed that the track exhibits a linear temperature coefficient of resistance between 20°C and 180°C, which is not strictly true but is sufficient to demonstrate the efficacy of the example. Other assumptions are apparent from the example.
1. Assume a track length of 1500 mm with a sensing part of 30 mm. The element resistance at a nominal running temperature of 180°C (assuming a 20°C base temperature this would be 160°C temperature rise) is 28 Ohms, and hence its power will be around 2000W at 240V nominal. Since a uniform power output is initially required, the power density at 180°C is arranged to be the same for the main and the sensor tracks. Thus the main track will have a resistance of 27.4 Ohms, and the sensor track will be 0.6 Ohms, based on their relative lengths. This gives a power dissipation at the control of 41 W. It is this power which should be maintained as constant as possible over the supply voltage range to ensure consistent performance.
2. Assume a main track PTCR of 2500 ppm, or 0.0025/°C. This is higher than is usual at present, since it would allow a high cold inrush current. However the presence of the NTCR track portion would compensate to some extent for this, and the subject element is only 2000W, or about 8 amps, which gives room for a greater PTCR. Assume also an NTCR for the sensor track of 2600 ppm, or 0.0026/°C. This is mid range of what is available, but is not a specific grade. This particular combination of track length and TCR is not entirely realistic, since high TCR materials tend to have a high resistivity and thus the tracks would be short and fat, rather than the long think track advantageously chosen, but the principle is the same, and the result valid.
3. Considering the main track, its "hot" resistance of 27.4 Ohms at 180°C will fall to 19.6 Ohms under "cold" (20°C) conditions on account of its PTCR. If the TCR was zero, the resistance would not fall, the running current at 200 volts would be 7.3 amps and the running power would be 1460W. However, because the main track has a PTCR of 0.0025/°C, its cold resistance will rise with current and at 200 volts will be 25.36 Ohms, lower than its 27.4 Ohms resistance at 180°C because the hot running temperature of the element will be lower on account of the lower 200 volts supply, assuming proportionality of power and temperature rise. With a resistance of 25.36 Ohms at 200 volts, the current will be 7.9 amps, which is only a very small reduction from the nominal 8 amps at 240 volts, and the running power will be close to 1600 watts.
4. Because the main track resistance is so much greater than the sensor track resistance, the main track acts as a ballast, giving substantially a constant current source for the sensor track independent of its resistance. Clearly the constant current will depend upon and be different for each supply voltage. So taking the sensor track and passing 7.9 amps through it gives a temperature rise of 150°C (170°C running temperature), its resistance rises to 0.626 Ohms, and the power dissipated is 39.1 watts. With a zero TCR, and 7.2 amps, this power would be 31.1W.
From this simple example it can be seen that the power regulation of the sensor track has improved from 76% to 95%, and the running temperature is improved from 132°C to 170°C. Further improvements are possible, for example raising the sensor track TCR to 0.003/°C gives a regulation of 96%. The actual values achieved will depend upon the properties of the thick film materials which are utilized for the formation of the heater tracks, for example upon the composition and proportion of the metal(s) incorporated into the printing paste.

A further advantage of the described arrangement is that the NTCR of the sensor track can offer some protection to the heating element in the areas which are covered by the walls of the enclosure. We have found that if water is not in contact with the heater surface at these points, the heater tracks can tend to overheat, leading to premature failure. This could be overcome by printing a low resistance track at these points, but this adds complexity to the design. The NTCR track resistance, however, would fall at these points, reducing the power generated (because the current is essentially constant) and reducing the tendency to overheat. A yet further advantage of this arrangement is that NTCR materials tend to have a high resistivity, especially compared to the conductive ink type printing paste materials currently used on thick film elements manufactured to our specifications. This means that to achieve the low (0.6 Ohm) resistance of the sensing area a short wide track will be required. This will give even heating under the enclosure and provide a good area for heat transfer to the control. The present design of track with low resistivity material necessitates several tracks under the control as shown for example in Figure 1 of EP-A-0 787 417 to achieve a sufficient power density.

While the arrangement described has the main track resistance much greater than the NTCR sensor track, it is possible that similar effects may be achieved using tracks with closer values of resistance. The presence of an NTCR can give rise to instability and the large main track resistance acts as a ballast to control this. Provided this is taken into account, tracks of similar resistance could be used. Also, nearly linear TCR characteristics have been assumed whereas a curved characteristic is more usual, with decreasing values at higher temperatures. A combination of materials with their PTC or NTC characteristics optimised for different temperatures could be used to linearise the response, or to counter the potential instability caused by having the track resistances more nearly equal.

The invention having been described herein by way of example, it is to be appreciated that the example is in all respects exemplary and that modifications and variations thereto are possible without departure from the spirit and scope of the invention. For example, whereas the invention has been described in the context of the enclosure concept first proposed in GB-A-1 143 834, the invention has wider application and could prove useful in any situation where the temperature of a thick film heating element is monitored by a temperature-sensitive device such as a bimetallic switch-actuating element, irrespective of whether such device is configured as a thermostat for maintaining the vessel contents at a predetermined temperature level or as an overtemperature protection cut-out.

## Claims

1. A thick film heating element (2) having a portion (60) of its resistive track within a defined part of the surface area of the heating element formed of a material having a negative temperature coefficient of resistance (NTCR) and having the main part (50) of the track formed of a material having a positive temperature coefficient of resistance (PTCR), the arrangement being such as to compensate, at least in part, for the effect of different supply voltages upon the operating temperature of said track portion.

2. A thick film heating element as claimed in claim 1 in combination with a thermally-responsive control device (3) having a temperature sensor arranged so as to be responsive to the temperature of said track portion (60).

3. The combination claimed in claim 2 wherein said thermally-responsive device (3) comprises a thermostat.

4. An electrically heated water boiling vessel incorporating a heating element (2) and thermally-responsive device (3) combination as claimed in claim 2 or 3.

5. An electrically heated water boiling vessel as claimed in claim 4 and wherein an enclosure (4) is provided in the vessel at a location corresponding to said defined part of the surface area of the heating element, the arrangement of the enclosure being such that in use of the vessel the enclosure will fill with water when the vessel is filled and the onset of boiling and the consequent generation of steam in the enclosure will cause the water substantially to be expelled therefrom so as to mimic a dry boil situation which can be sensed by said temperature sensor.

## Patentansprüche

1. Dickfilm-Heizelement (2), dessen Widerstandspfad innerhalb eines bestimmten Teils der Oberfläche des Heizelements einen aus einem Material mit negativem Widerstands-Temperaturkoeffizienten (NTCR) gebildeten Abschnitt (60) aufweist, während der Hauptteil (50) des Pfads aus einem Material mit positivem Widerstands-Temperaturkoeffizienten (PTCR) gebildet ist, wobei die Anordnung so getroffen ist, daß die Wirkung verschiedener Versorgungsspannungen auf die Betriebstemperatur des genannten Pfadabschnitts mindestens teilweise kompensiert wird.

2. Dickfilm-Heizelement nach Anspruch 1, in Kombination mit einer thermisch ansprechenden Steuereinrichtung (3) mit einem Temperatursensor, der so angeordnet ist, daß er auf die Temperatur des genannten Pfadabschnitts (60) anspricht.

3. Kombination nach Anspruch 2, wobei die thermisch ansprechende Einrichtung (3) einen Thermostat umfaßt.

4. Elektrisch beheizbarer Wasserkochkessel mit einer Kombination eines Heizelements (2) und einer thermisch ansprechenden Einrichtung (3) nach Anspruch 2 oder 3.

5. Elektrisch beheizbarer Wasserkochkessel nach Anspruch 4, wobei im Kessel an einem dem genannten bestimmten Teil der Oberfläche des Heizelements entsprechenden Ort eine Umfassung vorgesehen ist und die Anordnung der Umfassung so getroffen ist, daß sie sich im Gebrauch des Kessels mit Wasser füllt, wenn der Kessel gefüllt wird, und der Einsatz des Kochens und die folgende Dampferzeugung in der Umfassung bewirkt, daß Wasser im wesentlichen daraus verdrängt wird, so daß eine Trockenkoch-Situation nachgebildet wird, die von dem Temperatursensor erfaßt werden kann.

## Revendications

1. Elément chauffant en film épais (2) ayant une partie (60) de sa piste résistive située dans une partie définie de la surface superficielle de l'élément chauffant constituée d'un matériau ayant un coefficient négatif de température de résistance (NTCR), et ayant la partie principale (50) de la piste constituée d'un matériau ayant un coefficient positif de température de résistance (PTCR), l'agencement étant tel qu'il compense, au moins en partie, l'effet de tensions d'alimentation différentes sur la température de fonctionnement de ladite partie de piste.

2. Elément chauffant en film épais selon la revendication 1, en combinaison avec un dispositif de commande thermosensible (3) ayant un capteur de température agencé de manière à être sensible à la température de ladite partie de piste (60).

3. Combinaison selon la revendication 2, dans laquelle ledit dispositif thermosensible (3) comporte un thermostat.

4. Récipient pour faire bouillir de l'eau chauffé électriquement incorporant une combinaison d'un élément chauffant (2) et d'un dispositif électrique thermosensible (3) selon la revendication 2 ou 3.

5. Récipient pour faire bouillir de l'eau chauffé électriquement selon la revendication 4, et dans lequel une enceinte (4) est fournie dans le récipient au niveau d'un emplacement correspondant à ladite partie définie de la surface superficielle de l'élément chauffant, l'agencement de l'enceinte étant tel que lors de l'utilisation du récipient, l'enceinte va être remplie avec de l'eau, lorsque le récipient est rempli, et le début de l'ébullition et la création résultante de vapeur dans l'enceinte vont pratiquement amener l'eau à être expulsée de celle-ci, de manière à imiter une condition d'ébullition sèche qui peut être détectée par ledit capteur de température.
